Europäisches Patentamt

European Patent Office

Office européen des brevets

(19)

(11) Publication number: **0 274 160 B1**

## (12) EUROPEAN PATENT SPECIFICATION

(45) Date of publication of patent specification: **10.04.91**   (51) Int. Cl.⁵: **B60D 1/00**

(21) Application number: **87202554.9**

(22) Date of filing: **16.12.87**

(54) **A covering hood for hitch balls.**

(30) Priority: **17.12.86 DK 6073/86**

(43) Date of publication of application:
**13.07.88 Bulletin 88/28**

(45) Publication of the grant of the patent:
**10.04.91 Bulletin 91/15**

(84) Designated Contracting States:
**AT BE CH DE ES FR GB GR IT LI NL SE**

(56) References cited:
**FR-A- 1 493 555**
**FR-A- 2 426 583**
**FR-A- 2 469 301**
**US-A- 3 260 537**
**US-A- 3 658 363**

(73) Proprietor: **Stidsen, Poul**
**Toftegaardsvej 10**
**DK-8370 Hadsten(DK)**

(72) Inventor: **Stidsen, Poul**
**Toftegaardsvej 10**
**DK-8370 Hadsten(DK)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

**Description**

The present invention relates to a covering hood for hitch balls on the hitch-gear of a car for after-coupled trailers, comprising a bowl shaped shell member which is pivotally connected with a ring fitting for mounting on the hitch-gear so as to be shiftable between a closed position, in which it encloses a major part of the hitch ball, and an open position, in which it is pivoted away from the hitch ball to a position in a level below the hitch ball.

Such a covering hood is described in the FR-A-2 426 583, wherein it has been proposed to produce a cup shaped hitch ball covering hood in integral connection with a fexible strip having at its free end a mounting washer portion to be mounted about the hitch rod adjacent a lower widened portion thereof. Thus, the covering hood will be permanently hinged to the hitch rod, and it will be pivotally shiftable between a closed position, in which it covers the hitch ball as an inverted cup and encloses a major part of the hitch ball, and an open position, in which it is pivoted laterally away from the ball to a noninverted cup position in a level underneath the ball. However, the shifting of the hood between the two positions does not involve a pure pivot movement, since the hood should be additionally raised and lowered in order to be moved onto and away from its closed position on the hitch ball, and particularly if the cover fit is tight and the strip material is reasonably strong and heavy, then such a shifting movement is not too easy to carry out.

It is the purpose of the invention to provide an improved covering hood which is very easy to carry out and arranged in such a manner that it is simple to handle.

According to the invention the shell member is subsidivided in that the shell member is subdivided in two opposed bowl member which are individually pivotally secured to the ring fitting about respective horizontal pivot axes underneath the hitch ball, such that in the closed position they assume an upstanding position covering respective opposed halves of the hitch ball, while in the open position they project away from each other underneath and to respective opposed sides of the hitch ball. With this arrangement the bowl members will be shiftable by a purely pivotal movement, which is very easy to carry out. Moreover, the bowl members may be shaped so as to closely follow the shape of the ball, i.e. visually they may be very little dominating.

The ring fitting used for holding the bowl members may comprise a clamp ring adapted to be mounted about the hitch rod right below the hitch ball, so that the bowl members are correctly placed when it is ensured that the upper edge of the clamp ring abuts the lower side of the hitch ball. This is advantageous also for enabling a safe mounting of the carrier portion on the hitch rod itself, this rod often being slightly conical. With the ring fitting mounted in this manner, immediately underneath the hitch ball, the entire assembly will appear in a rather discrete manner, and the assembly will be almost universally applicable.

It should be mentioned that in US-A 3 658 363 there is disclosed a coupler system, where a drawbar for connection to a hitch ball is provided with two opposed socket sections that are pivotally arranged about respective vertical axes so as to be shiftable between respective laterally folded out positions and a closed, joined position, in which the socket sections engage over the hitch ball for drawing purposes. An application of a similar system for general hitch ball coverage has not been disclosed.

In the following the invention is described in more detail with reference to the drawing, in which Figs. 1-3 illustrate a first embodiment of a covering hood according to the invention,

Fig. 4 is a perspective view of a modified embodiment and

Figs. 5 and 6 are plan views of a slightly further embodiment.

The shown outer end of a normal hitch gear comprises a hitch rod 2 having an upwardly bent end portion 3, which is provided at its top with a ball 6, which has an agreed standard diameter. Also the thickness or the diameter of the end portion 4 where this is connected to the ball is of agreed standard dimensions, while the end portion may otherwise be cylindrical or - as shown - downwardly conically expanding.

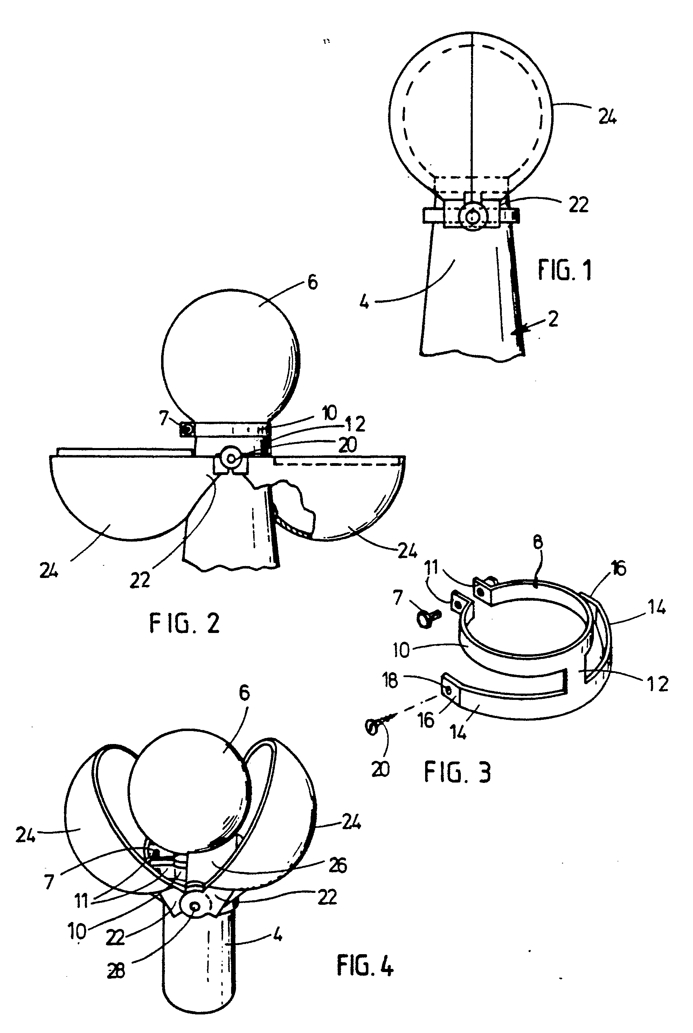

Referring to Figs. 1-3, at the upper end of the end portion 4, right below the ball 6 is fastened, by means of a clamp screw 7, a ring fitting 8 having a clamp ring 10 with end portions 11 for receiving the screw 7 and with a downwardly projecting plate portion 12 which continues outwards to both sides into arm portions 14 that are bent somewhat outwards relative the clamp ring 10. The arm portions 14 end in flat plate portions 16, which are mutually parallel and are provided with holes 18, which are placed diametrically opposite to each other on a diameter through the central axis of the end portion 4.

The holes 18 serve to receive self-cutting screws 20 which function as pivot pins for the lower ends of side arm portions 22 projecting downwardly from a couple of widely semi-spherical shells 24. These shells, which are preferably cast in plastic material, are mainly of equal shape, though such that the ends of the arm portions 22 of one shell may fit over the end portions of the arms of the other shell, whereby the shells may be fastened in a jointly hinged manner to the arm portions 14 by means of the screws 20, preferably by means of hinge bushings which may be clamped tightly by using these screws and yet allow a reasonably easy pivotability of the shells 24.

Hereby the shells 24 are pivotable between a closed position in which they enclose the hitch ball 6, and an open position in which they uncover the hitch ball and make it usable according to its purpose. The shells are preferably provided with edge portions which face each other and which, at the closing of the shells, engage each other frictionally or with snap lock action, such that they are reasonably stabilized in their closed condition, though, of course, easily openable therefrom.

As the hinge areas 18,20 are situated somewhat below the lower end of the ball 6, the shells in the opened position will be correspondingly situated entirely below the ball, whereby they will not obstruct the normal use of the hitch ball, see Fig. 2.

The use of a clamp strap 10 which is dimensioned so as to fit about the area of transition between the end portion 10 and the ball 6 is of importance in that the clamp fitting 8 will thereby be mountable in an appropriate manner on all existing standard hitch assemblies, regardless of whether the end portion 4 is cylindrical or more or less conical. The clamping may of course be affected by means of a clamp ring flush with the hinge axis of the semispherical shells, but as this axis should be situated somewhat below the ball 6, the ring should hereby, in order to be universally usable, be adapted also for stable clamping on a conical base portion, which is a disadvantageous mounting condition.

It will of course be a relevant possibility to provide hinge pins directly on the rod end portion 4 for providing the pivot axis of the half bowls 24, e.g. pins welded to the rod, which will be especially relevant in connection with newly produced hitch gears.

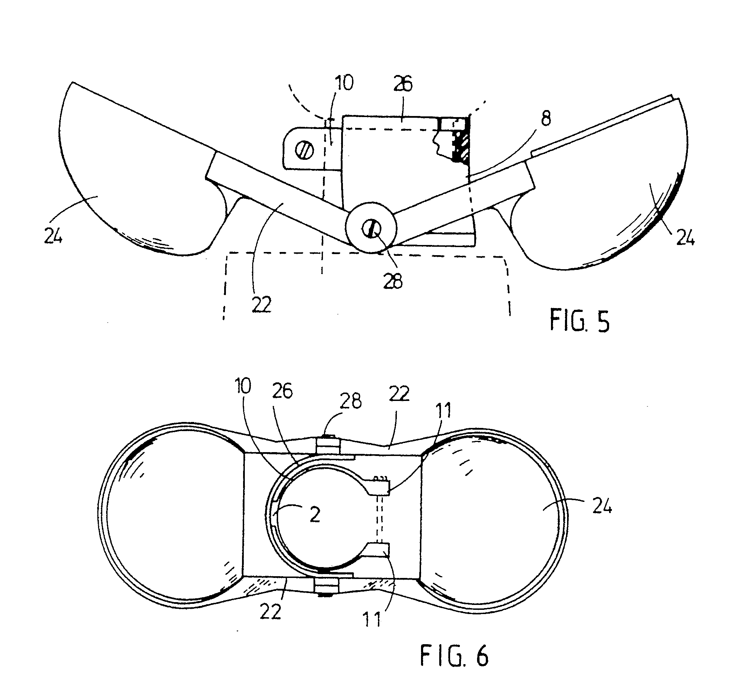

The embodiment shown in Fig. 5 is basically of a similar design, but here even the ring fitting 8 is made of plastic, whereby the arm portions of Fig. 3 are substituted by a nearly half cylindrical shell portion 26, which projects both upwardly and downwardly from the clamp ring portion 10 so as to constitute a means for engaging the lower side of the ball 6. The shell member 26 is integrally provided with opposed outwardly protruding pins 28, which, in a manner not shown, are slotted through a slightly widened outer head portion so as to be resiliently diametrically compressible for receiving with holding action the respective hinge holes of the arms 22 of the bowl members 24.

An entirely similar design, though with an increased length of the arm portions 22, is illustrated in Figs. 5 and 6. Particularly from Fig. 6 it will be seen that the clamp ring portion 10 is coherent with the half cylindrical shell portion 26 through a connector portion 29 opposite to the end portions 11 of the clamp ring 10, while the latter is otherwise free of the shell 26. Thus, the clamp rig portion 10 may be clamped about hitch gear rods 4 of different diameters without the distance between the opposed pivot pins 28 being changed.

The shell portion 26 extends over slightly more than 180° of arc for ensuring a fully stabilizing engagement with the underside of the ball 6 even when the clamp ring 10 is mounted on a conical rod end 4.

The covering hood according to the invention will be mountable on the hitch gear rod such that the opposed bowl members 24 are pivotable from and to their closed position by a movement croswise to the length direction of the vehicle, whereby the two bowl members are equally important for covering the front side and the respective opposed lateral sides of the hitch ball. However, the hood structure may also be oriented such that the bowl members are pivotable in the longitudinal vertical plane of the vehicle, such that one bowl member will cover the rear side of the ball while the other will cover the front side thereof. In practice it is of course the rear ball side which should be covered first of all, and on that account the foremost bowl member may be omitted. Even in that case the present invention is very advantageous in providing for a structure which is safely mountable even on a conical hitch ball rod member, i .e. universally applicable also for the holding of just a single cover bowl member.

## Claims

1. A covering hood for hitch balls (6) on the hitchgear of a car for after-coupled trailers, comprising a bowl shaped shell member which is pivotally connected with a ring fitting (8) for mounting on the hitch-gear so as to be shiftable between a closed position in which it encloses a major part of the hitch ball(6), and an open Posion, in which it is pivoted away from the hitch ball (6) to a position in a level below the hitch ball(6), characterized in that the shell member is subdivided in two opposed bowl members (24) which are individually pivotally secured to the ring fitting (8) about respective horizontal pivot axes (20) underneath the hitch ball, such that in the closed position they assume an upstanding position covering respective opposed halves of the hitch ball, while in the open position they project away from each other underneath and to respective opposed sides of the hitch ball.

2. A covering hood according to claim 1, in which the bowl members (24) are pivotal about a common axis (20).

3. A covering hood according to claims 1 or 2, in which the bowl members (24) are shaped so as to cover the hitch ball closely, and in which the said ring fitting (8) comprises a clamp ring (10) adapted to be mounted about the hitch rod right below the hitch ball such that the pivot axes (20) are correctly located relative the hitch ball when the top edge of the clamp ring (10) abuts the lower side of the ball.

4. A covering hood according to claims 1, 2 or 3, in which the pivot axis or axes (20) are located substantially spaced underneath the top edge of the clamp ring (10).

5. A covering hood according to claim 3, in which the ring fitting is a half cylindrical member (26) partly encircling the clamp ring (10) and having pivots (28) for the bowl members (24) located at opposite sides, while being associated with the clamp ring only at a restricted area (29) midway between the opposite pivots, the clamp ring having end portions (11) projecting laterally from the half cylindrical carrier member (26).

## Revendications

1. Un couvercle pour boules d'attelage (6) sur le dispositif d'attelage de remorques à l'arrière d'une voiture, comprenant une coquille sphérique fixée à une bague semi-circulaire (8) destinée à être montée sur le dispositif d'attelage de manière à pouvoir être pivotée en position fermée, dans laquelle elle entoure la majeure partie de la boule d'attelage (6), et en position ouverte, dans laquelle elle est écartée de la boule d'attelage (6), à un niveau inférieur à la boule d'attelage (6), caractérisé par le fait que la coquille est subdivisée en deux demi-sphères opposées (24) qui sont individuellement fixées à la bague semi-circulaire (8) sur des axes de pivotement (20) horizontaux sous la boule d'attelage, de sorte qu'en position fermée, elles occupent une position verticale, couvrant respectivement les deux moitiés opposées de la boule d'attelage, tandis qu'en position ouverte, elles s'écartent l'une de l'autre vers le bas et de chaque côté de la boule d'attelage.

2. Un couvercle conformément à la revendication 1, pour lequel les deux demi-sphères (24) pivotent autour d'un axe commun (20).

3. Un couvercle conformément aux revendications 1 et 2, pour lequel les deux demi-sphères (24) sont conçues de manière à couvrir étroitement la boule d'attelage, et pour lequel ladite bague semi-circulaire (8) est munie d'un collier de serrage (10) adapté à monter sur la barre d'attelage juste en dessous de la boule d'attelage, afin que les axes de pivotement (20) soient correctement situés par rapport à la boule d'attelage lorsque l'extrémité supérieure du collier de serrage (10) aboute le côté inférieur de la boule.

4. Un couvercle conformément aux revendications 1, 2 ou 3, pour lequel l'axe ou les axes de pivotement (20) sont placés nettement sous l'extrémité supérieure du collier de serrage (10).

5. Un couvercle conformément à la revendication 3, pour lequel la bague semi-circulaire est un élément semi-cylindrique (26) encerclant partiellement l'anneau de serrage (10) et muni de pivots (28) pour les deux coquilles hémisphériques (24) se faisant face, n'étant associée au collier de serrage que sur un espace restreint (29) uniquement à mi-chemin entre les pivots opposés, les deux extrémités (11) du collier de serrage s'écartant latéralement de la bague semi-cylindrique (26).

## Ansprüche

1. Kappe für Kupplungskugeln (6) an dem Kupplungsmechanismus eines Wagens für nachgekuppelte Anhänger, versehen mit einer schalenförmigen Umhüllung, die mit einer Ringhalterung (8) zur Befestigung an dem Kupplungsmechanismus derart gelenkig verbunden ist, daß sie zwischen einer Schließlage, in der sie einen wesentlichen Teil der Kupplungskugel (6) umschließt, und einer Offenlage, in der sie von der Kupplungskugel (6) weg in eine Stellung in einer Ebene unterhalb der Kupplungskugel (6) schwenkt, dadurch gekennzeichnet, daß die Umhüllung in zwei gegenüberliegende Schalen (24) unterteilt ist, die einzeln drehbar um jeweilige horizontale Drehachsen (20) unter der Kupplungskugel derart an der Ringhalterung (8) befestigt sind, daß sie in der Schließlage eine aufrechte Stellung einnehmen, wobei sie die jeweiligen gegenüberliegenden Hälften der Kupplungskugel bedecken, während sie in der Offenlage unter und an jeweiligen gegenüberliegenden Seiten der Kupplungskugel voneinander weg vorspringen.

2. Kappe nach Anspruch 1, in der die Schalen (24) um eine gemeinsame Achse (20) drehbar sind.

3. Kappe nach Anspruch 1 oder 2, in der die Schalen (24) so geformt sind, daß sie die Kupplungskugel dicht bedecken, und in der die Ringhalterung (8) einen Klemmring (10) umfaßt, der gerade unter der Kupplungskugel derart um die Kupplungsstange befestigt werden kann, daß die Drehachsen (20) sich an der richtigen Stelle relativ zur Kupplungskugel befinden, wenn der obere Rand des Klemmringes (10) an das untere Kugelende anstößt.

4. Kappe nach Anspruch 1, 2 oder 3, in der die Drehachse oder -achsen (20) sich im wesentlichen mit Abstand unter dem oberen Rand des Klemmringes (10) befinden.

5. Kappe nach Anspruch 3, in der die Ringhalterung ein halbzylindrisches Element (26) ist, das den Klemmring (10) teilweise umschließt und Drehzapfen (28) für die an gegenüberliegenden Seiten befindlichen Schalen (24) aufweist, wobei sie nur in einem beschränkten Bereich (29) auf halbem Wege zwischen den gegenüberliegenden Drehzapfen mit dem Klemmring verbunden ist, welcher Klemmring Endteile (11) aufweist, die seitlich an dem halbzylindrischen Tragelement (26) vorspringen.

FIG. 1

FIG. 2

FIG. 3

FIG. 4

FIG. 5

FIG. 6